# EUROPÄISCHE PATENTSCHRIFT

(11) **EP 2 163 523 B1**
(45) Veröffentlichungstag und Bekanntmachung des Hinweises auf die Patenterteilung: **16.02.2011**
(21) Anmeldenummer: 09010470.4
(22) Anmeldetag: 13.08.2009
(51) Int. Cl.: C02F 1/68, C02F 1/76

(54) **Verfahren zum Halogenieren von Wasser**
Water halogenating process
Procédé d'halogénation de l'eau

(30) Priorität: 06.09.2008 DE 202008011925 U
(43) Veröffentlichungstag der Anmeldung: 17.03.2010
(73) Patentinhaber: Bestpool GmbH, 33803 Steinhagen (DE)
(72) Erfinder: Stiens, Dominik, 33442 Herzbrock-Clarholz (DE)
(74) Vertreter: Wiebusch, Manfred

(56) Entgegenhaltungen:
- WO-A1-03/066534
- WO-A1-2009/063160
- GB-A- 2 403 947
- US-B1- 6 337 024

## Beschreibung

Die Erfindung betrifft ein Verfahren zum Halogenieren von Wasser.

In WO 03/066 534 A wird eine Vorrichtung zum Halogenieren von Wasser beschrieben, mit einem Sieb zur Aufnahme von halogenidhaltigen Feststoffen, einer Sprüheinrichtung zum Besprühen der Feststoffe mit Wasser, einem unter dem Sieb angeordneten Auffangbecken, an das in Abstand oberhalb des Bodens eine Auslassleitung angeschlossen ist, und einer Steuereinrichtung zum Aktivieren der Sprüheinrichtung und zum Abpumpen des halogenierten Wassers aus dem Auffangbecken.

Solche Vorrichtungen dienen insbesondere zum Chlorieren des Wassers in Schwimmbädern. Bei den Feststoffen handelt es sich dann z.B. um Tabletten aus Calciumhypochlorit, die durch das Besprühen mit Wasser angelöst werden, so dass sich eine Calciumhypochloritlösung im Auffangbecken sammelt und dann in das Schwimmbadwasser eindosiert werden kann.

Die Feststoffe sind zumeist nicht vollständig löslich, so dass gewisse Rückstände wie Kalkschlamm oder dergleichen verbleiben, die im Laufe der Zeit das gesamte Dosiersystem verunreinigen und verstopfen.

Bei der bekannten Vorrichtung wird mit einem Sensor der Chlorgehalt im Schwimmbecken gemessen, und wenn eine minimale Konzentration erreicht wird, wird eine Pumpe aktiviert, mit der das Wasser über die Auslassleitung aus dem Auffangbecken abgepumpt wird. Um zu verhindern, dass sich Feststoffe in dem Auffangbecken absetzen, wird am Boden des Auffangbeckens ein Wasserstrahl eingeleitet, mit dem das Wasser in dem Auffangbecken in Bewegung gehalten wird.

In GB 2 403 497 A wird eine Vorrichtung beschrieben, bei der das Auffangbecken über einen Überlauf mit einem separaten Sammelbecken verbunden ist, aus dem dann das chlorierte Wasser entnommen wird. Durch Aktivieren und Deaktivieren der Sprüheinrichtung wird der Wasserstand in diesem Sammelbecken reguliert.

Aufgabe der Erfindung ist es, ein Verfahren zu schaffen, mit dem sich eine Verunreinigung des halogenierten Wassers wirksamer als bisher unterdrücken lässt.

Diese Aufgabe wird erfindungsgemäß durch das in Anspruch 1 angegebene Verfahren gelöst.

Bei diesem Verfahren hat der in das Auffangbecken eingetragene Schlamm ausreichend Zeit, sich abzusetzen und sich unterhalb des Anschlusses der Auslassleitung auf dem Boden des Auffangbeckens zu sammeln, bevor die Lösung das Auffangbecken verlässt.

Vorteilhafte Ausgestaltungen und Weiterbildungen der Erfindung sind in den Unteransprüchen angegeben.

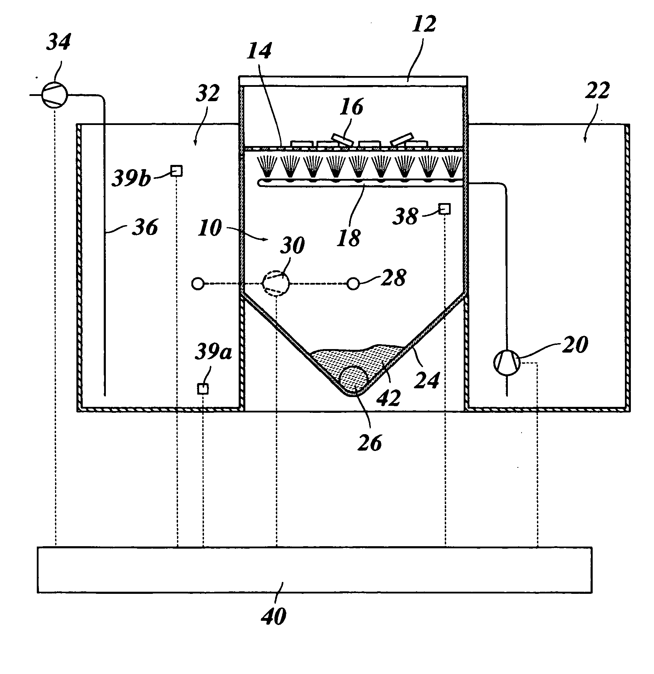

Im folgenden wird ein Ausführungsbeispiel anhand der Zeichnung näher erläutert.

Die einzige Zeichnungsfigur zeigt einen schematischen Schnitt durch eine Vorrichtung zum Chlorieren von Wasser nach dem erfindungsgemäßen Verfahren.

Kernstück der Vorrichtung ist ein Auffangbecken 10, das oben durch einen lösbaren Deckel 12 verschlossen ist und in das unterhalb des Deckels ein Gitter oder Sieb 14 eingebaut ist. Nach dem Öffnen des Deckels 12 können halogenidhaltige Feststoffe 16, beispielsweise Tabletten aus Calciumhypochlorit, auf das Sieb 14 aufgelegt werden.

Unterhalb des Siebes 14 ist eine Sprüheinrichtung 18 angeordnet, mit der die Feststoffe 16 von unten mit Wasser besprüht werden können. Das Wasser wird mit Hilfe einer Pumpe 20 aus einem neben dem Auffangbecken 10 angeordneten Vorratstank 22 entnommen.

Das von der Sprüheinrichtung 18 im wesentlichen gleichmäßig auf der gesamten Grundfläche des Siebes 14 versprühte Wasser löst die Tabletten an, und die dabei entstehende Calciumhypochloritlösung tropft durch die Öffnungen des Siebes 14 in das Auffangbecken 10.

Dieses Auffangbecken hat einen trichterförmigen Boden 24 und weist an der tiefsten Stelle dieses Bodens eine verschließbare Reinigungsöffnung 26 auf. In Abstand oberhalb der tiefsten Stelle des Bodens, beispielsweise dicht oberhalb der Stelle, an der die trichterförmige Verjüngung des Bodens beginnt, geht von dem Auffangbecken 10 eine Auslassleitung 28 ab, die das Auffangbecken 10 über eine motorgetriebene Absperrung 30 mit einem Produkttank 32 verbindet, der auf der dem Vorratstank 22 entgegengesetzten Seite des Auffangbeckens 10 angeordnet ist. Aus dem Produkttank 32 kann die Lösung dann mit Hilfe einer Pumpe 34 über eine Abgabeleitung 36 nach Bedarf in das Schwimmbadwasser eindosiert werden.

Im Vorratstank 10 ist ein Füllstandswächter 38 angeordnet, der insbesondere einen maximalen Füllstand der Lösung im Auffangbecken 10 dicht unterhalb der Sprüheinrichtung 18 aber deutlich oberhalb der Mündung der Auslassleitung 28 erfaßt. Weitere Füllstandswächter 39a und 39b sind im Produkttank 32 angeordnet.

Der Füllstandswächter 38, 39a, 39b, die Absperrung 30 und die Pumpen 20 und 34 sind an eine elektronische Steuereinrichtung 40, beispielsweise eine Mikroprozessorsteuerung angeschlossen, die so programmiert oder programmierbar ist, daß sie den Prozeβablauf wie folgt steuert.

Sobald der Füllstandswächter 39a meldet, daß der Produkttank vom Dosiersystem weitestgehend geleert wurde, öffnet sich die Absperrung 30. Nun fließt die inzwischen durch Sedimentation vom Kalkschlamm 42 befreite Lösung zum weiteren Gebrauch über die Auslaßleitung 28 in den Produkttank 32. Der Auffangbehälter 10 wird dabei nur bis zur Unterkante der der Auslaßleitung 28 geleert. Der nach unten abgesetzte Kalkschlamm gelangt somit nicht in den Produkttank 32.

Nach Ablauf einer in der Steuerung 40 programmierten Zeit schließt sich die Absperrung 30 wieder.

Wenn Absperrung 30 geschlossen ist, wird die Pumpe 20 aktiviert und somit Frischwasser aus dem Vorratstank 22 abgepumpt und über die Sprüheinrichtung 18 auf die Feststoffe 16 verdüst. Die dabei entstehende Lösung sammelt sich im Auffangbecken 10.

Wenn der Füllstandswächter 38 feststellt, daß der maximale Füllstand im Auffangbecken erreicht ist, wird die Pumpe 20 abgeschaltet. Während der Produkttank 32 nun nach Bedarf über die Abgabeleitung 36 geleert wird, kann sich die frisch hergestellte Lösung im Auffangbecken 10 durch Sedimentation vom Kalkschlamm befreien, bis der Füllstandswächter wieder das Auffüllen des Produkttanks 32 auslöst. Die Geschwindigkeit, mit der der Produkttank 32 geleert wird, ist so niedrig, daß die frisch hergestellte Lösung stets für eine gewisse Absetzzeit, beispielsweise 20 Minuten, im Auffangbekken 10 verbleibt, bevor sie in den Produkttank umgefüllt wird.

Der Füllstandswächter 39b ist so angeordnet, daß er im Falle einer durch einen Defekt bedingten Überfüllung der Anlage das gesamte System abschaltet.

Der Auffangbehälter 10 und der Produkttank 32 sind oberhalb des Füllstandswächters 39b durch eine Bohrung miteinander verbunden. Somit kann der Füllstandswächter 39b für beide Behälter arbeiten.

Die trichterförmige Gestalt des Bodens 24 des Auffangbeckens sorgt dafür, daß das Volumen der Restflüssigkeit, die unterhalb der Auslaßleitung 28 im Auffangbecken verbleibt, relativ klein ist und schafft andererseits genügend Platz für den sich dort sammelnden Schlamm. Wenn sich eine gewisse Menge an Schlamm angesammelt hat, kann dieser nach Öffnen der Reinigungsöffnung 26 ausgetragen werden. Die Restflüssigkeit, die sich unterhalb der Auslaßleitung 28 noch im Auffangbecken 10 befindet, kann dabei dazu benutzt werden, den Schlamm einfach aus dem unteren Teil des Auffangbeckens herauszuspülen.

Wahlweise kann das Auffangbecken auch einen flache Boden haben, so daß eine größere Menge an Schlamm aufgenommen werden kann.

Der Wasservorrat im Vorratstank 22 muß von Zeit zu Zeit ergänzt werden. Dies geschieht mit Hilfe von bekannten Zulaufeinrichtungen, die hier nicht weiter beschrieben werden.

Die Dauer der Absetzzeit kann an der Steuereinrichtung 40 je nach Konsistenz der verwendeten Feststoffe eingestellt werden. Die Vorrichtung läßt sich deshalb stets so betreiben, daß in den Produkttank 32 stets nur eine weitgehend rückstandsfreie Lösung gelangt und auch die Absperrung 30 und die Pumpe 34 nicht mit Schlamm oder sonstigen Rückständen verstopft werden.

Wahlweise kann das Umfüllen der Lösung aus dem Auffangbecken 10 in den Produkttank 22 auch mit Hilfe einer Pumpe erfolgen.

In einer anderen Ausführungsform ist es auch möglich, die Lösung nach Ablauf der Absetzzeit mit Hilfe der Auslaßleitung 28 direkt in das Schwimmbadwasser einzudosieren. Der Produkttank 32 hat jedoch den Vorteil, daß er ein stetigeres und/oder bedarfsgerechteres Eindosieren der Lösung in das Wasser unabhängig vom Betrieb der Chloriervorrichtung ermöglicht.

## Patentansprüche

1. Verfahren zum Halogenieren von Wasser, in einer Vorrichtung mit einem Sieb (14) zur Aufnahme von halogenidhaltigen Feststoffen (16), einer Sprüheinrichtung (18) zum Besprühen der Feststoffe mit Wasser, einem unter dem Sieb (14) angeordneten Auffangbecken (10), an das in Abstand oberhalb des Bodens (24) eine Auslassleitung (28) angeschlossen ist, und einer Steuereinrichtung (40) zum Aktivieren der Sprüheinrichtung (18), welches Verfahren die folgenden Schritte aufweist:
- Aktivieren der Sprühreinrichtung (18), bis ein bestimmter Füllstand in dem Auffangbecken (10) erreicht ist,
- Abwarten einer Absetzzeit, in der in das Auffangbecken (10) eingetragener Schlamm ausreichend Zeit hat, sich abzusetzen und sich unterhalb des Anschlusses der Auslassleitung (28) auf dem Boden (24) des Auffangbeckens zu sammeln, und
- Öffnen der Auslassleitung (28), um das halogenierte Wasser aus dem Auffangbecken (10) abzuleiten.

2. Verfahren nach Anspruch 1, bei dem das halogenierte Wasser über die Auslassleitung (28) aus dem Auffangbecken (10) in einen Produkttank (32) eingeleitet wird.

3. Verfahren nach Anspruch 2, bei dem mit der Steuereinrichtung (40) die Entleerung des Produkttanks (32) und das Umfüllen des halogenierten Wassers aus dem Auffangbecken in den Produkttank gesteuert wird.

## Claims

1. A method of halogenating water in a device having a sieve (14) for carrying halogenide-containing solids (16), a spray device (18) for spraying water onto the solids, a collecting vessel (10) arranged below the sieve (14), an outlet line (28) being connected to the vessel (10) in a position spaced apart from and above the bottom (24), and a control device (40) for activating the spray device (18), the method comprising the steps of:
- activating the spray device (18) until a certain fill level in the collecting vessel (10) has been reached,
- waiting for the lapse of a settling time in which sludge introduced into the collecting vessel (10) has time enough to settle and to accumulate on the bottom (24) of the vessel below the point where the outlet line (28) is connected, and
- opening the outlet line (28) for draining the halogenated water from the collecting vessel (10).

2. The method according to claim 1, wherein the halogenated water is supplied from the collecting vessel (10) via the outlet line (28) into a product tank (32).

3. The method according to claim 2, wherein the emptying of the product tank (32) and the decanting of halogenated water from the collecting vessel into the product tank are controlled by means of the control device (40).

## Revendications

1. Procédé pour halogéner de l'eau, dans un dispositif comportant un tamis (14) pour recevoir des substances solides contenant des halogénures (16), un dispositif de pulvérisation (18) pour pulvériser de l'eau sur les substances solides, un réservoir de collecte (10) agencé sous le tamis (14), auquel est raccordée une conduite de sortie (28) à une certaine distance au-dessus du fond (24), et des moyens de commande (40) pour activer le dispositif de pulvérisation (18), lequel procédé comporte les étapes suivantes consistant à :
- activer le dispositif de pulvérisation (18) jusqu'à ce qu'un niveau défini soit atteint dans le réservoir de collecte (10),
- attendre pendant une période de décantation au cours de laquelle de la boue qui a pénétré dans le réservoir de collecte (10) a un temps suffisant pour se déposer et s'accumuler sur le fonds (24) du réservoir de collecte sous le raccordement de la conduite de sortie (28), et
- ouvrir la conduite de sortie (28) pour évacuer l'eau halogénée hors du réservoir de collecte (10).

2. Procédé selon la revendication 1, dans lequel l'eau halogénée est transférée à partir du réservoir de collecte (10) dans un réservoir de produit (32) par l'intermédiaire de la conduite de sortie (28).

3. Procédé selon la revendication 2, dans lequel les moyens de commande (40) commandent la vidange du réservoir de produit (32) et le transfert de l'eau halogénée du réservoir de collecte dans le réservoir de produit.
